(19) Europäisches Patentamt
European Patent Office
Office européen des brevets

(11) **EP 4 657 374 A1**

(12) **EUROPEAN PATENT APPLICATION**

(43) Date of publication:
**03.12.2025 Bulletin 2025/49**

(21) Application number: **25178614.1**

(22) Date of filing: **23.05.2025**

(51) International Patent Classification (IPC):
**G06T 7/20** (2017.01) **G06V 10/764** (2022.01)
**G06V 10/82** (2022.01)

(52) Cooperative Patent Classification (CPC):
**G06T 7/20; G06V 10/764; G06V 10/82;**
G06T 2207/10016; G06T 2207/20081;
G06T 2207/20084; G06T 2207/20101;
G06T 2207/30232; G06T 2207/30236

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.05.2024 US 202418680208**

(71) Applicant: **Microsoft Technology Licensing, LLC
Redmond, WA 98052 (US)**

(72) Inventors:
• **PATRAVALI, JAY
Redmond, Washington, 98052 (US)**
• **YU, FUXUN
Redmond, Washington, 98052 (US)**
• **MADHOK, RISHI
Redmond, Washington, 98052 (US)**
• **SINGH, SIMRANJIT
Redmond, Washington, 98052 (US)**
• **KARIANAKIS, NIKOLAOS
Redmond, Washington, 98052 (US)**
• **KUKAL, RUPANJALI
Redmond, Washington, 98052 (US)**

(74) Representative: **CMS Cameron McKenna Nabarro
Olswang LLP
Cannon Place
78 Cannon Street
London EC4N 6AF (GB)**

(54) **MULTIMODAL AERIAL GROUNDING AND TRACKING**

(57) A data processing system implements obtaining a first frame of video content comprising a plurality of frames over which a target object is to be tracked; obtaining a first point input denoting a point on the first frame of video content representing a location of the target object on the first frame of video content; obtaining a natural language description of the target object; encoding the first frame of video content, the first point input, and the natural language description of the target object as fused encoding information using a single object tracking pipeline; and tracking the target object with the single object tracking pipeline using the fused encoding information.

**FIG. 2**

EP 4 657 374 A1

**Description**

## BACKGROUND

Single Object Tracking (SOT), one of the fundamental research topics in computer vision, aims to locate a target object in a video sequence based on an initial reference provided in the first frame by bounding box, natural language or both. Predominantly, tracking algorithms employ the target bounding box identified in the initial frame as a reference point. However, recent advancements have seen the adoption of Natural Language (NL) specifications to identify the target, as the bounding box often cannot provide rich target semantics, which can lead to ambiguity. For more accurate target reference, some trackers fuse multiple modalities and specify the target using both language and bounding box.

Aerial Visual Tracking plays an essential role across many applications, including fire detection, cinematography, infrastructure inspection, object tracking, search and rescue operations, surveillance, anomaly detection, and traffic management. Aerial video data adds extra layers of complexity to the usual challenges found in general video data, such as occlusions and low image resolution. Such aerial video data may be captured by manned aerial vehicles and/or unmanned aerial vehicles (UAVs). Mechanical vibrations induced by the aerial vehicle can cause motion blur and rapid camera movement, resulting in drastic and blurry changes in the motion of the target. Accompanying lighting and weather conditions can also affect the appearance of the target drastically. An aerial vehicle's ability to fly in all directions can cause multiple appearances of the object to be captured. Additionally, fluctuations in the object size and appearance are even more common in a long sequence. The primary obstacle in researching language-guided aerial tracking is the lack of language-annotated single object tracking aerial data, despite the availability of multiple open-source aerial datasets. Using natural language is counter-intuitive when dealing with tiny objects. Annotating bounding boxes is equivalently problematic for small objects where the target has lower image resolution, overhead occlusions, dense scenarios, and nighttime scenes with partial occlusions or unclear visibility of the object. Hence, there is a need for improved systems and methods for implementing accurate and reliable SOT techniques.

## SUMMARY

An example data processing system according to the disclosure may include a processor and a machine-readable medium storing executable instructions. The instructions when executed cause the processor alone or in combination with other processors to perform operations including obtaining a first frame of video content comprising a plurality of frames over which a target object is to be tracked; obtaining a first point input denoting a point on the first frame of video content representing a location of the target object on the first frame of video content; obtaining a natural language description of the target object; encoding the first frame of video content, the first point input, and the natural language description of the target object as fused encoding information using a single object tracking pipeline; and tracking the target object with the single object tracking pipeline using the fused encoding information.

An example method implemented in a data processing system includes obtaining a first frame of video content comprising a plurality of frames over which a target object is to be tracked; obtaining a first point input denoting a point on the first frame of video content representing a location of the target object on the first frame of video content; obtaining a natural language description of the target object; encoding the first frame of video content, the first point input, and the natural language description of the target object as fused encoding information using a single object tracking pipeline; and tracking the target object with the single object tracking pipeline using the fused encoding information.

An example data processing system according to the disclosure may include a processor and a machine-readable medium storing executable instructions. The instructions when executed cause the processor alone or in combination with other processors to perform operations including receiving, at a single object tracking pipeline, a request to track a target object from an object tracking application, the request including a first point input denoting a point on a first frame of video content representing a location of the target object on the first frame of the video content and a natural language description of the target object; encoding the first frame of the video content using an image encoder to obtain image embeddings; encoding the first point input using a click encoder to obtain click embeddings; encoding the natural language description of the target object using a language encoder to obtain language embeddings; providing the image embeddings, the language embeddings, and the click embeddings as an input to a unified fusion encoder to obtain fused encoding information; and providing the fused encoding information to a unified fusion decoder to obtain bounding box information for the target object, the bounding box information surrounding a predicted location of the target object within the first frame of the video content.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

## BRIEF DESCRIPTION OF THE DRAWINGS

The drawing figures depict one or more implementations in accord with the present teachings, by way of example only, not by way of limitation. In the figures, like reference numerals refer to the same or similar elements. Furthermore, it should be understood that the drawings are not necessarily to scale.

FIG. 1 is a diagram showing an example computing environment in which the techniques disclosed herein for object tracking are implemented.

FIG. 2 is a diagram showing an example implementation of the object tracking pipeline shown in FIG. 1.

FIGS. 3A and 3B are diagrams of an example user interface of a tracking application according to the techniques disclosed herein.

FIG. 4 is a diagram providing examples of training data that can be used to train the object tracking pipeline shown in FIG. 1

FIG. 5 is an example flow chart of an example process for single object tracking according to the techniques described herein.

FIG. 6 is an example flow chart of another example process for single object tracking according to the techniques described herein.

FIG. 7 is a block diagram showing an example software architecture, various portions of which may be used in conjunction with various hardware architectures herein described, which may implement any of the described features.

FIG. 8 is a block diagram showing components of an example machine configured to read instructions from a machine-readable medium and perform any of the features described herein.

## DETAILED DESCRIPTION

Techniques for single object tracking in video content are provided herein. These techniques provide a technical solution to the technical problems associated with current SOT techniques that utilize vision-based cues and/or natural language descriptions to identify and track a target object in video content. This is because both vision-based and natural language-based SOT techniques face significant technical problems.

Vision-based tracking techniques typically utilize a target bounding box in the first frame of the video content to crop a template that facilitate tracking of the target object in subsequent frames of the video content. Such vision-based tracking techniques utilize various computer vision techniques, such as but not limited to correlation filters, to track the target object across the frames of the video content. However, such techniques often fail in scenarios in which the target object experiences fast motions and/or high variations in appearance. The target bounding box provides limited semantics of the target object resulting in visual ambiguity and poor generalization by the SOT.

Language-guided tracking also faces a significant obstacle due to the lack of language-annotated training data, despite the availability of open-source datasets. Currently available aerial datasets often prove to be insufficient in scenarios involving multiple similar-looking objects. Furthermore, using natural language to describe target objects in scenarios involving small-sized objects, because of the unavailability of clean semantics hinders the grounding of the target objects. Annotating bounding boxes is also problematic for small target objects where the target object has lower image resolution, overhead occlusions, dense scenarios, and/or nighttime scenes with partial occlusion and/or unclear visibility of the target object.

The techniques herein address the technical problems discussed above and/or other technical problems associated with current SOT techniques by introducing a SOT pipeline that utilizes a click modality alongside language and vision cues to provide enhanced target localization and tracking efficiency. The click modality relies on an additional point prompt, referred to herein as a "click" input, to denote the target object in the video content. The point prompt or click input helps the SOT pipeline in accurately grounding and tracking of small target objects. Use of a point prompt also improves the user experience by enabling the user to provide a single point input that represents the location of the target object rather than requiring the user to attempt to draw a bounding box around the target object. The SOT pipeline merges the click input with the visual and language-based inputs using a unified fusion encoder. The SOT pipeline also implements a click memory module and a vision memory module that leverage temporal sematic information from the target object appearance over time and path localization information from point encodings. The outputs of the memory modules are analyzed using a unified fusion decoder with a localization to predict target object bounding boxes. Technical benefits of this approach include enhanced target localization and tracking efficiency. These and other technical benefits of the techniques disclosed herein will be evident from the discussion of the example implementations that follow.

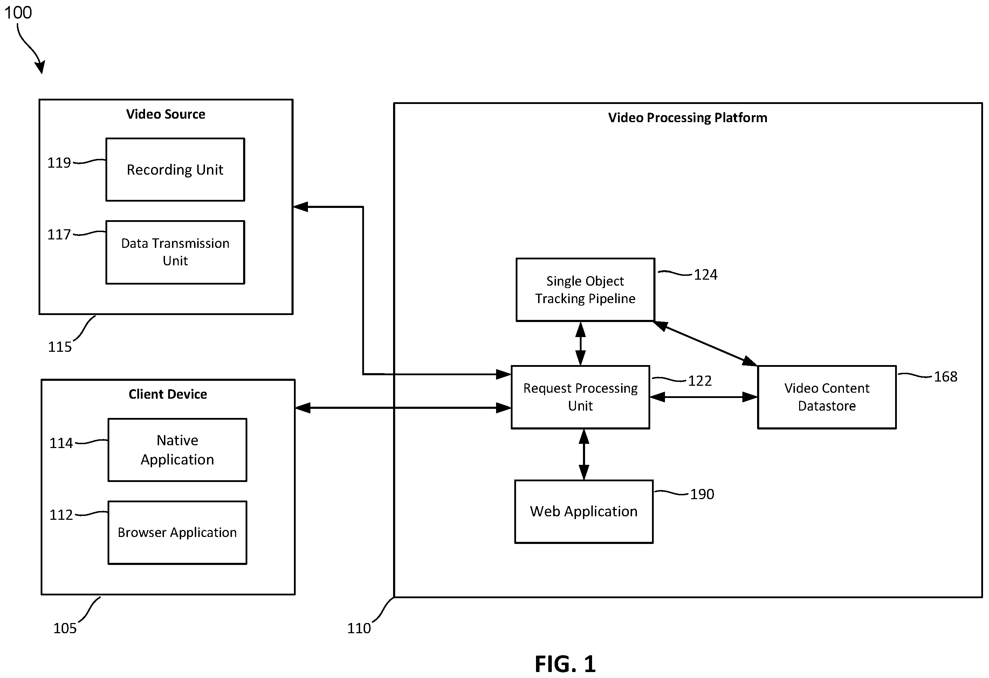

FIG. 1 is a diagram showing an example computing environment 100 in which the techniques disclosed herein for single object tracking may be implemented. The computing environment 100 includes a video processing platform 110. The example computing environment 100 also includes a client device 105. The client device 105 communicates with the video processing platform 110 via a network (not shown). The network connection may be a combination of one or more public and/or private networks and may be implemented at least in part by the Internet.

In the example shown in FIG. 1, the video processing platform 110 is implemented as a cloud-based service or set of services. However, in other implementations, the video processing platform 110 can be implemented on a server of a local network or in an implementation of the client device 105. For example, the video processing platform 110 may be implemented in an autonomous driving system of a vehicle, in a video surveillance system, in an augmented reality device, and/or in other systems that facilitate human-computer interaction.

The video processing platform 110 is configured to receive video content captured by a video source 115. The video source 115 includes a recording unit 119 and a data transmission unit 117. The recording unit 119 is configured to obtain video content from one or more video cameras (not shown). The video cameras may be disposed on one or more manned aerial vehicles and/or UAVs. The video cameras may be part of a video surveillance system that includes cameras distributed across an area to be monitored, such as but not limited to a retail establishment, one or more roadways, a home or other residential building, a business or educational campus, and/or other areas in which tracking of people, vehicles, animals, and/or other objects over a series of frames of video content is needed. The recording unit 119 receives and buffers the video content received from the video cameras in a memory of the video source 115. In some implementations, the recording unit 119 stores a video content in a persistent memory that provides a backup of the video data. The persistent memory is a removable data storage device that can be read by the video processing platform 110. The data transmission unit 117 sends the video content captured by the data transmission unit 117 to the video processing platform 110 via a wired or wireless connection. The video source 115 may be located remotely from the video processing platform 110, and the video source 115 communicates with the video processing platform 110 over a network connection.

The video processing platform 110 implements a request processing unit 122, a single object tracking pipeline 124, a video content datastore 168, and a web application 190. The request processing unit 122 is configured to receive content from the video source 115 for storage and/or processing by video processing platform 110. The request processing unit 122 stores the video content in the video content datastore 168. The video content datastore 168 is a persistent datastore in the memory of the video processing platform 110 that enables video content captured by the video source 115 to be accessed by authorized users of the client device 105 and/or for object tracking to be performed on the video content. The video processing platform 110 can perform object tracking on a target object in substantially real time as the video content is received by the video processing platform 110 and/or on a target object in video content that was previously received and stored in the video content datastore 168. The single object tracking pipeline 124 analyzes the video content and performs the object tracking. The single object tracking pipeline 124 implements the SOT techniques provided herein. Additional details of the single object tracking pipeline 124 are shown in the examples which follow.

The request processing unit 122 is also configured to receive requests from the native application 114 of the client device 105 and/or the web application 190 of the video processing platform 110. The requests may include but are not limited to requests to view video content captured by the video source 115 and/or track an object in the video content according to the techniques provided herein. The native application 114 and/or the web application 190 provide a user interface that enables the user to access the video content, to track and target object, and to provide human-in-loop annotations for instances in which the target object is lost for more than a threshold period of time.

The client device 105 is a computing device that may be implemented as a portable electronic device, such as a mobile phone, a tablet computer, a laptop computer, a portable digital assistant device, a portable game console, and/or other such devices. The client device 105 may also be implemented in computing devices having other form factors, such as a desktop computer, vehicle onboard computing system, a kiosk, a point-of-sale system, a video game console, and/or other types of computing devices. While the example implementation illustrated in FIG. 1 includes just one client device, other implementations may include a different number of client devices 105 that utilize the video processing platform 110. In some implementations, the video processing platform 110, or at least a portion of the functionality thereof, is implemented by the native application 114 on the client device 105. The client device 105 may be a wearable device or a mobile device that provides an augmented reality experience in which digital context is overlaid onto real-life environments and/or objects captured using a camera of the client device 105 in some implementations. In such implementations, the object tracking techniques provided herein can be used to track the location of real-world objects to facilitate generating of the digital overlays. In yet other implementations, the client device 105 is the navigation system or other computing device of an autonomous or semi-autonomous vehicle to track objects in the environment surrounding the vehicle.

The browser application 112 is an application for accessing and viewing web-based content, the web-based content may be provided by the video processing platform 110. The video processing platform 110 provides the web application 190 that enables users to view video content, track objects in the video content using the techniques herein, and/or annotate the video content in some implementations. A user of the client device 105 may access the web application 190 via the browser application 112, and the browser application 112 renders a user interface for interacting with the video processing platform 110 in the browser application 112.

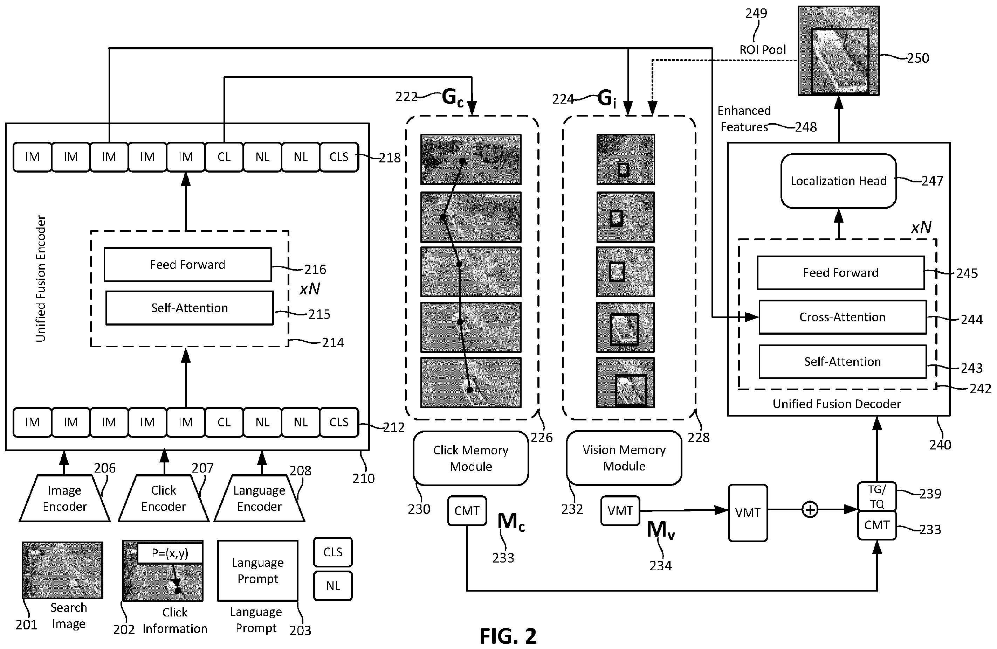

FIG. 2 is a diagram showing an example implementation of the single object tracking pipeline 124 shown in FIG. 1.

The single object tracking pipeline 124 performs click-language-guided visual grounding and tracking according to the techniques provided herein. Given a sequence of visual frames of video content in which a target object is to be tracked $I_i \in \{I_0, ..., I_t\}$, a language description **l** of the sequence of visual frames, and a click prompt **c = (x, y)** pointing to the position of the target object on the first frame of the sequence of visual frames $I_0$, the single object tracking pipeline 124 grounds the target object and subsequently tracks the target object through the sequence of visual frames. The single object tracking pipeline 124 implements a model that first performs visual grounding by using the click c, language prompt **l,** and the first frame $I_0$ yielding a resized image patch $I_{temp}$ which acts as a template for the target object. At any subsequent timestep **i,** the model performs tracking by using the click c, the language prompt **l,** the image frame $I$, and the template $I_{temp}$.

The single object tracking pipeline 124 receives an input search image 201 corresponding to the first frame of the sequence of visual frames $I_0$, a click prompt 202 corresponding to the click prompt **c**, and a natural language prompt 203 corresponding to language description **l**. The search image 201 is the first frame of the sequence frames of video in which the target object is to be tracked. The user inputs the click prompt 202 which identifies a point corresponding to the target object in the search image 201. The search image 201 can be presented in a user interface of the native application 114 and/or the web application 190 which enables the user to select video content in which a target object is to be tracked. The user interface shows the search image 201 and enables the user to click on that image to input the click prompt 202 indicating the location of the target object in the search image 201. The user interface also allows the user to input a natural language description of the target object as natural language prompt 203.

The input search image 201, the click prompt 202, and the natural language prompt 203 are each encoded using a modality specific encoder. The search image 201 is encoded by the image encoder 206, the click prompt 202 is encoded by the click encoder 207, and the natural language prompt 203 is encoded by the language encoder 208. The output of the modality specific encoders is provided to the unified fusion encoder 210 as encoded inputs 212.

The image encoder 206 is implemented using a Swin Transformer in some implementations. For grounding, the input search image $I_i \in \mathbb{R}^{3 \times H_i x W_i}$ yields flattened image embeddings $E_i \in \mathbb{R}^{N_i x N_v}$. Similarly, during tracking, the template image $I_{temp} \in \mathbb{R}^{3 \times H_2 x W_2}$ and the input search image $I_i \in \mathbb{R}^{3 \times H_i x W_i}$ yields flattened image embeddings $E_i \in \mathbb{R}^{N_{temp} x N_v}$ and $E_i \in \mathbb{R}^{N_i x N_v}$. The embeddings generated by the image encoder 206 are provided as part of the encoded inputs 212 provided to the unified fusion encoder 210.

The language encoder 208 is implemented using the BERT model in some implementations. Other implementations utilize a different language model for performing natural language processing. The natural language prompt 203 is first tokenized before passing the prompt to the language encoder 208. The language encoder 208 also add a classification (CLS) token to the beginning of the token list and a separator (SEP) token to the end of the token list before encoding. This yields $E_l \in \mathbb{R}^{(N+2) x N_l}$, where $N$ is the maximum length of the text sequence.

The click encoder 207 generates point embeddings of the click prompt 202 to guide the model in detecting the target object using positional information. To this end, the click encoder 207 leverages positional encodings to encode the click prompt 202. Specifically, the points are encoded using a combination of Gaussian Random Fourier features and a learnable embedding vector. Given a click point **c = (x, y),** the click embedding $E_c \in \mathbb{R}^{1 x 2 N_c}$ is defined as

$$E_c = \left[ V_c + \left[ \cos(2\pi b_1^T c), ..., \cos(2\pi b_{N_c}^T c), \sin(2\pi b_1^T c), ..., \sin(2\pi b_1^T c) \right]^T \right] \quad (1)$$

where $b_i \in \mathbb{R}^2$ are drawn from a normal distribution, and $V_c \in \mathbb{R}^{1 x 2 N_c}$ is a learnable click embedding.

During a training phase, the center of the ground truth bounding box with random jitter is used to as the input claim prompt c for each frame. During an evaluation phase in which the model has already been trained, the click prompt 202 is input by the user for the first frame $I_0$, and for all subsequent frames, and the center of the predicted bounding box in the previous frame is used as the successive click input.

The embedding from the input image $E_i$, the template $E_{temp}$, the language prompt $E_l$, and the click $E_c$ are provided as an input to the unified fusion encoder 210. The encodings are concatenated to yield queries for the self-attention-based Feature Fusion Encoder $\mathcal{F}_e$.

$$G_i, G_c, G_l = \mathcal{F}_e(E_i, E_{temp}, E_c, E_l) \quad (2)$$

where $G_i$, $G_c$, $G_l$ are the enhanced image representation tokens 224, the click representation tokens 222, and the language representation tokens corresponding to the CLS token. During grounding, template encoding $E_{temp}$ is masked out from the self-attention (and is passed as a zero tensor).

The unified fusion encoder 210 includes N layers 214 that include a self-attention mechanism 215 and a feed forward mechanism 216. The self-attention mechanism 215 accepts input encodings and weights their relevance to each other to generate output encodings 218 (also referred to herein as fused encoding information). The feed forward sublayer is a fully connected feed-forward network that further processes each of the output encodings individually. The output encodings from the layer 214 may be passed on as an input to a subsequent layer of the unified fusion encoder 210 or output to the unified fusion decoder 240, the click memory module 230, and the vision memory module 232.

The single object tracking pipeline 124 relies on the historical semantic appearances of the target object and past click information to improve the robustness of the model against overhead occlusions, motion drift, and the changing appearance of the target object. The single object tracking pipeline 124 module includes two temporal memory modules that utilize this historical data: a click memory module 230 and a vision memory module 232.

The click memory module 230 is a transformer-based learning module that effectively integrates the click features and enforces path localization, thus addressing many limitations of the language-vision framework. A click point serves as a spatial reference point, which exists across time, irrespective of changes in shape, appearance, and/or visibility of the target object. The click memory module 230 is used to depict the target object moving across various points as a point enriched with both global and local semantic information from the image and the language prompt.

The click memory module 230 stacks the enhanced click output $G_c$ from $\mathcal{F}_e$ from $k$ previous frames 226 as encoded click history, which is then concatenated with the enhanced language encoding $G_l$ before being passed into the transformer encoder. Subsequently, the single object tracking pipeline 124 uses a transformer decoder with a learnable target query to cross-attend on encoder output yielding a click temporal clue $M_c$ 233 (also referred to herein as a click memory token or CMT).

The vision memory module 232 facilitates the processing and utilizing semantic structure of a target object from different angles, zoom, and illuminations across time. The vision memory module 232 stores region of interest (ROI) pooled features 249 of search image patches corresponding to k previously predicted bounding boxes 228 for the target object. These pooled features are flattened and concatenated with the enhanced language encoding $G_l$ and fed into a vanilla transformer encoder. The vision memory module 232 then utilizes a transformer decoder along with a learnable query vector and encoder outputs as keys and values to compute a semantic temporal clue $M_v$ 234 for future tracking. The semantic temporal clue $M_v$ 234 is also referred to herein as a vision memory token or VMT.

The unified fusion decoder 240 uses a cross-attention transformer with a target query and enhanced image representation tokens $G_i$ as keys and values. To decode, the target query 239 is constructed by concatenating a learnable query embedding and the click temporal clue $M_c$ 233. The "click" is treated as a separate modality by the single object tracking pipeline 124, and the single object tracking pipeline 124 performs a concatenation of the click to the target decoder instead of summation to avoid incorrect fusion of the information. Additionally, to inject temporal visual information, the semantic temporal clue $M_v$ 234 from the vision memory module is added to the target query. Finally, in order to unify grounding and tracking, a common localization head 247 is used for the bounding box prediction. The output 250 represents the output of the single object tracking pipeline 124 which includes a bounding box around the target object. This output is updated as each of the frames of the video content are processed by the single object tracking pipeline 124.

The unified fusion decoder 240 shown in FIG. 2 includes $N$ layers 242 that each include a self-attention mechanism 243, a cross-attention mechanism 244, and a feed forward mechanism 245. The self-attention mechanism 243 operates similarly to the self-attention mechanism 215 of the unified fusion encoder 210, and the feed forward mechanism 245 operates similar to the feed forward mechanism 216 of the unified fusion encoder 210. The unified fusion decoder 240 includes the cross-attention mechanism 244. The cross-attention mechanism 244 embeds sequences of the same dimension. One of the embedding sequences serves as the query input, while the other embedding sequence serves as a key and value input. In the example shown in FIG. 2, one of the sequences provided as input 248 to the cross-attention mechanism 244 is $G_i$, the enhanced image representation tokens 224.

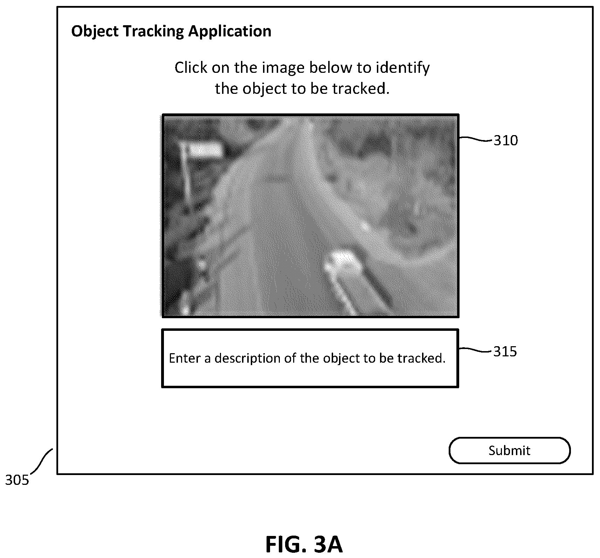

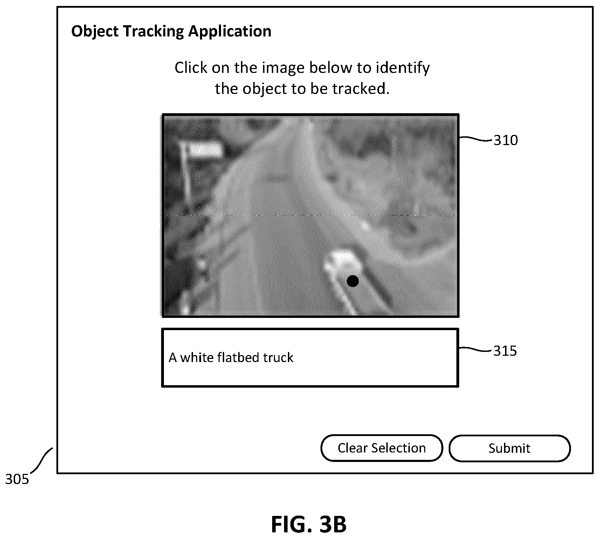

FIGS. 3A and 3B are diagrams of an example user interface 305 of a tracking application according to the techniques disclosed herein. The tracking application can be implemented by the native application 114 and/or the web application 190. The tracking application enables a user to access video content that includes an object to be tracked, to identify this object by clicking on the object, to provide a natural language description of the object which helps the single object tracking pipeline 124 to identify the tracked object in the frames of the video content, and to output bounding box information for each frame of the video content that indicates the location of the tracked object within the frame. The user interface 305 can present the frames of the video content and overlay the bounding boxes determined by the single object tracking pipeline 124 over the frames of video content so that the user can monitor the location of the tracked object.

The user interface 305 includes an image pane 310 and an object description field 315. The image pane 310 shows the first frame of the video content in which a target object is to be tracked. The user can click on, touch, or otherwise interact with the image pane 310 to provide the point input indicative of the location of the target object. The user can also input a description of the tracked object in the object description field 315. The user can click on or otherwise activate the submit button to submit the click input and the natural language description of the target object to the single object tracking pipeline 124 to initiate tracking of the tracked object.

FIG. 3A shows an initial state of the user interface 305, and FIG. 3B shows an example in which the user has provided the point input and the natural language description of the target object. Once the single object tracking pipeline 124 begins outputting the bounding box information for the tracked object, the user interface 305 can present the frames of the video content with the bounding boxes overlaid on the frame of video content on the user interface 305. The bounding box information generated by the single object tracking pipeline 124 can also be stored in the video content datastore 168 with the frames of video content to enable the video content and the tracking information to be accessed and replayed at a later time.

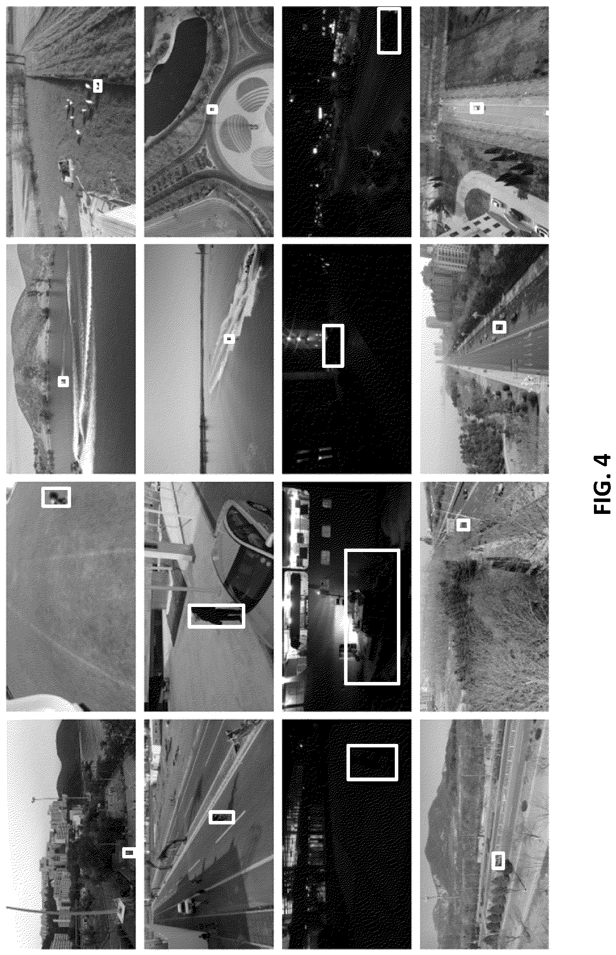

FIG. 4 is a diagram providing examples of training data that can be used to train the object tracking pipeline shown in FIG. 1. The examples in the dataset include frames of video content captured using with a manned or unmanned aerial vehicle. Each frame has been labeled with a bounding box and can also be labeled with a natural language description of the target object marked by the bounding box. Such training data can be used to train the models used by the single object tracking pipeline 124.

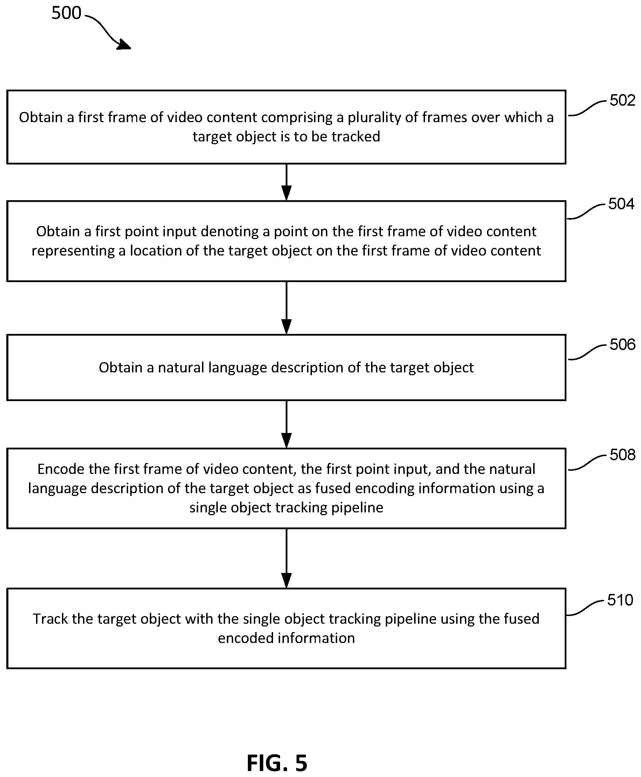

FIG. 5 is an example flow chart of an example process 500 for single object tracking according to the techniques described herein. The process 500 can be implemented by the single object tracking pipeline 124 discussed in the preceding examples.

The process 500 includes an operation 502 of obtaining a first frame of video content comprising a plurality of frames over which a target object is to be tracked. The single object tracking pipeline 124 obtains the first frame of video content from the video content datastore 168 in some instances. The video content can also be streamed to the single object tracking pipeline 124 from the video source 115.

The process 500 includes an operation 504 of obtaining a first point input denoting a point on the first frame of video content representing a location of the target object on the first frame of video content. The user clicks on the target object in the first frame of the video content to provide the single object tracking pipeline 124 with contextual information about the target object. As discussed in the preceding examples, the user can provide the first point input via the user interface 305 discussed in the preceding examples.

The process 500 includes an operation 506 of obtaining a natural language description of the target object. The user can also provide a natural language description of the target object in addition to the click information. The user interface 305 provides a field in which the user can input the natural language description of the target object.

The process 500 includes an operation 508 of encoding the first frame of video content, the first point input, and the natural language description of the target object as fused encoding information using a single object tracking pipeline 124. As discussed in the preceding examples, the single object tracking pipeline 124 uses modality-specific encoders to analyze these inputs.

The process 500 includes an operation 510 of tracking the target object with the single object tracking pipeline using the fused encoding information. The single object tracking pipeline 124 tracks the target object in the current frame using the techniques discussed in the preceding examples.

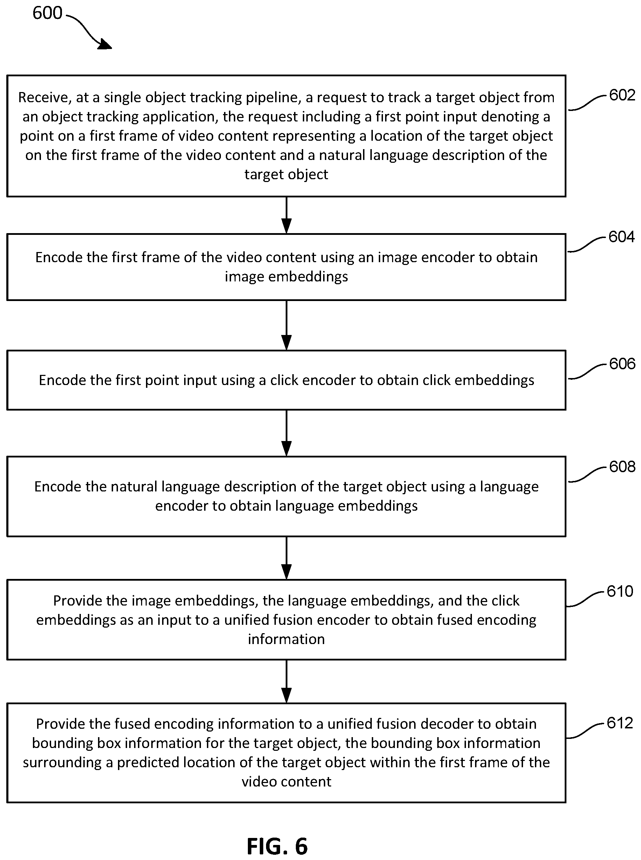

FIG. 6 is an example flow chart of an example process 600 for single object tracking according to the techniques described herein. The process 600 can be implemented by the single object tracking pipeline 124 discussed in the preceding examples.

The process 600 includes an operation 602 of receiving, at a single object tracking pipeline, a request to track a target object from an object tracking application. The request includes a first point input denoting a point on a first frame of video content representing a location of the target object on the first frame of the video content and a natural language description of the target object. As discussed in the preceding examples, a tracking application can be implemented by the native application 114 and/or the web application 190. The tracking application implements a user interface 305 that enables the user to initiate a tracking session. The user interface 305 allows the user to provide a point input that identifies a location of the target object in a frame of the video content and a natural language description of the target object.

The process 600 includes an operation 604 of encoding the first frame of the video content using an image encoder 206 to obtain image embeddings.

The process 600 includes an operation 606 of encoding the first point input using a click encoder 207 to obtain click embeddings.

The process 600 includes an operation 608 of encoding the natural language description of the target object using a language encoder 208 to obtain language embeddings.

The process 600 includes an operation 610 of providing the image embeddings, the language embeddings, and the click embeddings as an input to a unified fusion encoder to obtain fused encoding information. The multimodal embeddings are provided as set of encoded inputs 212 to the unified fusion encoder 210. The unified fusion encoder 210 analyzes these embeddings to determine the fused encoding information 218 using the techniques described in the preceding examples.

The process 600 includes an operation 612 of providing the fused encoding information to a unified fusion decoder 240 to obtain bounding box information 250 for the target object. The bounding box information 250 surrounds a predicted location of the target object within the first frame of the video content. As discussed in the preceding examples, the bounding box information 250 can be overlaid on frames of the video content to facilitate tracking of the tracked object. The overlaid video content can be stored in the video content datastore 168 and/or presented on a user interface 305 of the tracking application.

The detailed examples of systems, devices, and techniques described in connection with FIGS. 1-6 are presented herein for illustration of the disclosure and its benefits. Such examples of use should not be construed to be limitations on the logical process embodiments of the disclosure, nor should variations of user interface methods from those described herein be considered outside the scope of the present disclosure. It is understood that references to displaying or presenting an item (such as, but not limited to, presenting an image on a display device, presenting audio via one or more loudspeakers, and/or vibrating a device) include issuing instructions, commands, and/or signals causing, or reasonably expected to cause, a device or system to display or present the item. In some embodiments, various features described in FIGS. 1-6 are implemented in respective modules, which may also be referred to as, and/or include, logic, components, units, and/or mechanisms. Modules may constitute either software modules (for example, code embodied on a machine-readable medium) or hardware modules.

In some examples, a hardware module may be implemented mechanically, electronically, or with any suitable combination thereof. For example, a hardware module may include dedicated circuitry or logic that is configured to perform certain operations. For example, a hardware module may include a special-purpose processor, such as a field-programmable gate array (FPGA) or an Application Specific Integrated Circuit (ASIC). A hardware module may also include programmable logic or circuitry that is temporarily configured by software to perform certain operations and may include a portion of machine-readable medium data and/or instructions for such configuration. For example, a hardware module may include software encompassed within a programmable processor configured to execute a set of software instructions. It will be appreciated that the decision to implement a hardware module mechanically, in dedicated and permanently configured circuitry, or in temporarily configured circuitry (for example, configured by software) may be driven by cost, time, support, and engineering considerations.

Accordingly, the phrase "hardware module" should be understood to encompass a tangible entity capable of performing certain operations and may be configured or arranged in a certain physical manner, be that an entity that is physically constructed, permanently configured (for example, hardwired), and/or temporarily configured (for example, programmed) to operate in a certain manner or to perform certain operations described herein. As used herein, "hardware-implemented module" refers to a hardware module. Considering examples in which hardware modules are temporarily configured (for example, programmed), each of the hardware modules need not be configured or instantiated at any one instance in time. For example, where a hardware module includes a programmable processor configured by software to become a special-purpose processor, the programmable processor may be configured as respectively different special-purpose processors (for example, including different hardware modules) at different times. Software may accordingly configure a processor or processors, for example, to constitute a particular hardware module at one instance of time and to constitute a different hardware module at a different instance of time. A hardware module implemented using one or more processors may be referred to as being "processor implemented" or "computer implemented."

Hardware modules can provide information to, and receive information from, other hardware modules. Accordingly, the described hardware modules may be regarded as being communicatively coupled. Where multiple hardware modules exist contemporaneously, communications may be achieved through signal transmission (for example, over appropriate circuits and buses) between or among two or more of the hardware modules. In embodiments in which multiple hardware modules are configured or instantiated at different times, communications between such hardware modules may be achieved, for example, through the storage and retrieval of information in memory devices to which the multiple hardware modules have access. For example, one hardware module may perform an operation and store the output in a memory device, and another hardware module may then access the memory device to retrieve and process the stored output.

In some examples, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by, and/or among, multiple computers (as examples of machines including processors), with these operations being accessible via a network (for example, the Internet) and/or via one or more software interfaces (for example, an application program interface (API)). The performance of certain of the operations may be distributed among the processors, not only residing within a single machine, but deployed across several machines. Processors or processor-implemented modules may be in a single geographic location (for example, within a home or office environment, or a server farm), or may be distributed across multiple geographic locations.

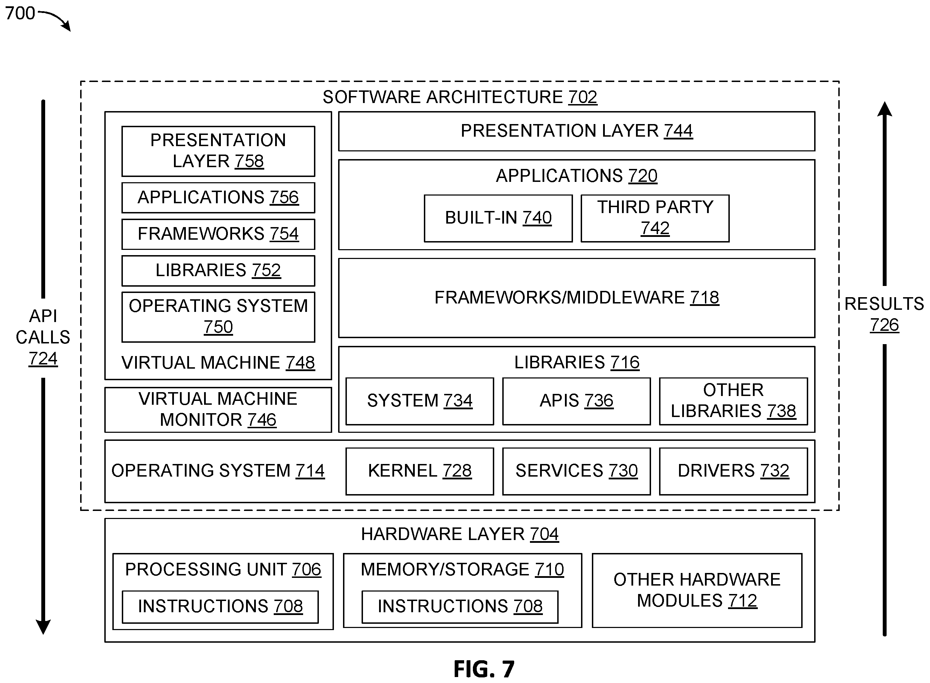

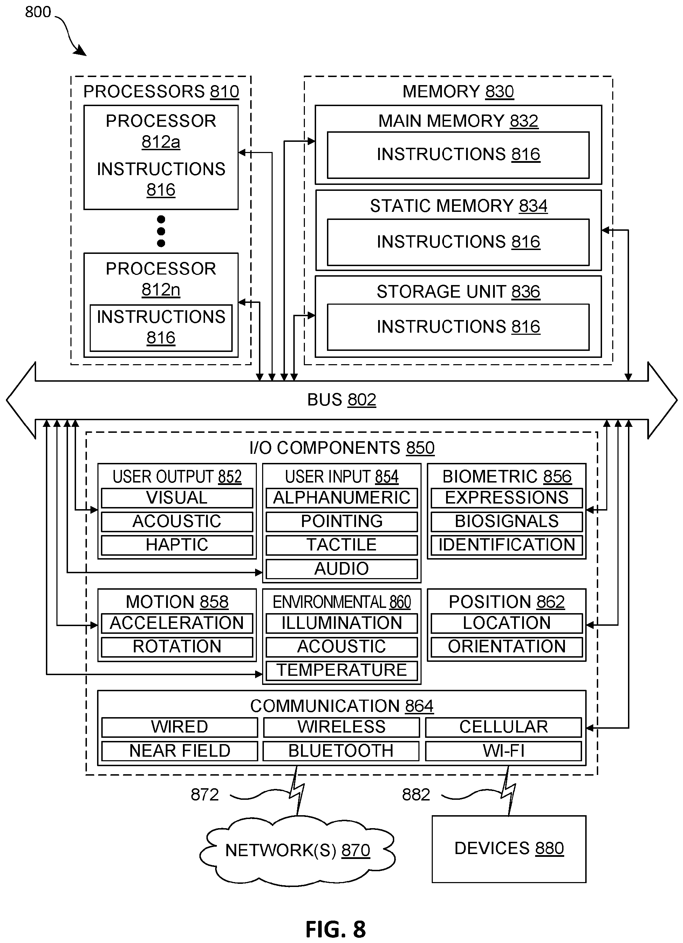

FIG. 7 is a block diagram 700 illustrating an example software architecture 702, various portions of which may be used in conjunction with various hardware architectures herein described, which may implement any of the above-described features. FIG. 7 is a nonlimiting example of a software architecture, and it will be appreciated that many other architectures may be implemented to facilitate the functionality described herein. The software architecture 702 may execute on hardware such as a machine 800 of FIG. 8 that includes, among other things, processors 810, memory/storage 830, and input/output (I/O) components 850. A representative hardware layer 704 is illustrated and can represent, for example, the machine 800 of FIG. 8. The representative hardware layer 704 includes a processing unit 706 and associated executable instructions 708. The executable instructions 708 represent executable instructions of the software architecture 702, including implementation of the methods, modules and so forth described herein. The hardware layer 704 also includes a memory/storage 710, which also includes the executable instructions 708 and accompanying data. The hardware layer 704 may also include other hardware modules 712. Instructions 708 held by processing unit 706 may be portions of instructions 708 held by the memory/storage 710.

The example software architecture 702 may be conceptualized as layers, each providing various functionality. For example, the software architecture 702 may include layers and components such as an operating system (OS) 714, libraries 716, frameworks/middleware 718, applications 720, and a presentation layer 744. Operationally, the applications 720 and/or other components within the layers may invoke API calls 724 to other layers and receive corresponding results 726. The layers illustrated are representative in nature and other software architectures may include additional or different layers. For example, some mobile or special purpose operating systems may not provide the frameworks/middleware 718.

The OS 714 may manage hardware resources and provide common services. The OS 714 may include, for example, a kernel 728, services 730, and drivers 732. The kernel 728 may act as an abstraction layer between the hardware layer 704 and other software layers. For example, the kernel 728 may be responsible for memory management, processor management (for example, scheduling), component management, networking, security settings, and so on. The services 730 may provide other common services for the other software layers. The drivers 732 may be responsible for controlling or interfacing with the underlying hardware layer 704. For instance, the drivers 732 may include display drivers, camera drivers, memory/storage drivers, peripheral device drivers (for example, via Universal Serial Bus (USB)), network and/or wireless communication drivers, audio drivers, and so forth depending on the hardware and/or software configuration.

The libraries 716 may provide a common infrastructure that may be used by the applications 720 and/or other components and/or layers. The libraries 716 typically provide functionality for use by other software modules to perform tasks, rather than rather than interacting directly with the OS 714. The libraries 716 may include system libraries 734 (for example, C standard library) that may provide functions such as memory allocation, string manipulation, file operations. In addition, the libraries 716 may include API libraries 736 such as media libraries (for example, supporting presentation and manipulation of image, sound, and/or video data formats), graphics libraries (for example, an OpenGL library for rendering 2D and 3D graphics on a display), database libraries (for example, SQLite or other relational database functions), and web libraries (for example, WebKit that may provide web browsing functionality). The libraries 716 may also include a wide variety of other libraries 738 to provide many functions for applications 720 and other software modules.

The frameworks/middleware 718 provide a higher-level common infrastructure that may be used by the applications 720 and/or other software modules. For example, the frameworks/middleware 718 may provide various graphic user interface (GUI) functions, high-level resource management, or high-level location services. The frameworks/middleware 718 may provide a broad spectrum of other APIs for applications 720 and/or other software modules.

The applications 720 include built-in applications 740 and/or third-party applications 742. Examples of built-in applications 740 may include, but are not limited to, a contacts application, a browser application, a location application, a media application, a messaging application, and/or a game application. Third-party applications 742 may include any applications developed by an entity other than the vendor of the particular platform. The applications 720 may use functions available via OS 714, libraries 716, frameworks/middleware 718, and presentation layer 744 to create user interfaces to interact with users.

Some software architectures use virtual machines, as illustrated by a virtual machine 748. The virtual machine 748 provides an execution environment where applications/modules can execute as if they were executing on a hardware machine (such as the machine 800 of FIG. 8, for example). The virtual machine 748 may be hosted by a host OS (for example, OS 714) or hypervisor, and may have a virtual machine monitor 746 which manages operation of the virtual machine 748 and interoperation with the host operating system. A software architecture, which may be different from software architecture 702 outside of the virtual machine, executes within the virtual machine 748 such as an OS 750, libraries 752, frameworks 754, applications 756, and/or a presentation layer 758.

FIG. 8 is a block diagram illustrating components of an example machine 800 configured to read instructions from a machine-readable medium (for example, a machine-readable storage medium) and perform any of the features described herein. The example machine 800 is in a form of a computer system, within which instructions 816 (for example, in the form of software components) for causing the machine 800 to perform any of the features described herein may be executed. As such, the instructions 816 may be used to implement modules or components described herein. The instructions 816 cause unprogrammed and/or unconfigured machine 800 to operate as a particular machine configured to carry out the described features. The machine 800 may be configured to operate as a standalone device or may be coupled (for example, networked) to other machines. In a networked deployment, the machine 800 may operate in the capacity of a server machine or a client machine in a server-client network environment, or as a node in a peer-to-peer or distributed network environment. Machine 800 may be embodied as, for example, a server computer, a client computer, a personal computer (PC), a tablet computer, a laptop computer, a netbook, a set-top box (STB), a gaming and/or entertainment system, a smart phone, a mobile device, a wearable device (for example, a smart watch), and an Internet of Things (IoT) device. Further, although only a single machine 800 is illustrated, the term "machine" includes a collection of machines that individually or jointly execute the instructions 816.

The machine 800 may include processors 810, memory/storage 830, and I/O components 850, which may be communicatively coupled via, for example, a bus 802. The bus 802 may include multiple buses coupling various elements of machine 800 via various bus technologies and protocols. In an example, the processors 810 (including, for example, a central processing unit (CPU), a graphics processing unit (GPU), a digital signal processor (DSP), an ASIC, or a suitable combination thereof) may include one or more processors 812a to 812n that may execute the instructions 816 and process data. In some examples, one or more processors 810 may execute instructions provided or identified by one or more other processors 810. The term "processor" includes a multi-core processor including cores that may execute instructions contemporaneously. Although FIG. 8 shows multiple processors, the machine 800 may include a single processor with a single core, a single processor with multiple cores (for example, a multi-core processor), multiple processors each with a single core, multiple processors each with multiple cores, or any combination thereof. In some examples, the machine 800 may include multiple processors distributed among multiple machines.

The memory/storage 830 may include a main memory 832, a static memory 834, or other memory, and a storage unit 836, both accessible to the processors 810 such as via the bus 802. The storage unit 836 and memory 832, 834 store instructions 816 embodying any one or more of the functions described herein. The memory/storage 830 may also store temporary, intermediate, and/or long-term data for processors 810. The instructions 816 may also reside, completely or partially, within the memory 832, 834, within the storage unit 836, within at least one of the processors 810 (for example, within a command buffer or cache memory), within memory at least one of I/O components 850, or any suitable combination thereof, during execution thereof. Accordingly, the memory 832, 834, the storage unit 836, memory in processors 810, and memory in I/O components 850 are examples of machine-readable media.

As used herein, "machine-readable medium" refers to a device able to temporarily or permanently store instructions and data that cause machine 800 to operate in a specific fashion, and may include, but is not limited to, random-access memory (RAM), read-only memory (ROM), buffer memory, flash memory, optical storage media, magnetic storage media and devices, cache memory, network-accessible or cloud storage, other types of storage and/or any suitable combination thereof. The term "machine-readable medium" applies to a single medium, or combination of multiple media, used to store instructions (for example, instructions 816) for execution by a machine 800 such that the instructions, when executed by one or more processors 810 of the machine 800, cause the machine 800 to perform and one or more of the features described herein. Accordingly, a "machine-readable medium" may refer to a single storage device, as well as "cloud-based" storage systems or storage networks that include multiple storage apparatus or devices. The term "machine-readable medium" excludes signals per se.

The I/O components 850 may include a wide variety of hardware components adapted to receive input, provide output, produce output, transmit information, exchange information, capture measurements, and so on. The specific I/O components 850 included in a particular machine will depend on the type and/or function of the machine. For example, mobile devices such as mobile phones may include a touch input device, whereas a headless server or IoT device may not include such a touch input device. The particular examples of I/O components illustrated in FIG. 8 are in no way limiting, and other types of components may be included in machine 800. The grouping of I/O components 850 are merely for simplifying this discussion, and the grouping is in no way limiting. In various examples, the I/O components 850 may include user output components 852 and user input components 854. User output components 852 may include, for example, display components for displaying information (for example, a liquid crystal display (LCD) or a projector), acoustic components (for example, speakers), haptic components (for example, a vibratory motor or force-feedback device), and/or other signal generators. User input components 854 may include, for example, alphanumeric input components (for example, a keyboard or a touch screen), pointing components (for example, a mouse device, a touchpad, or another pointing instrument), and/or tactile input components (for example, a physical button or a touch screen that provides location and/or force of touches or touch gestures) configured for receiving various user inputs, such as user commands and/or selections.

In some examples, the I/O components 850 may include biometric components 856, motion components 858, environmental components 860, and/or position components 862, among a wide array of other physical sensor components. The biometric components 856 may include, for example, components to detect body expressions (for example, facial expressions, vocal expressions, hand or body gestures, or eye tracking), measure biosignals (for example, heart rate or brain waves), and identify a person (for example, via voice-, retina-, fingerprint-, and/or facial-based identification). The motion components 858 may include, for example, acceleration sensors (for example, an accelerometer) and rotation sensors (for example, a gyroscope). The environmental components 860 may include, for example, illumination sensors, temperature sensors, humidity sensors, pressure sensors (for example, a barometer), acoustic sensors (for example, a microphone used to detect ambient noise), proximity sensors (for example, infrared sensing of nearby objects), and/or other components that may provide indications, measurements, or signals corresponding to a surrounding physical environment. The position components 862 may include, for example, location sensors (for example, a Global Position System (GPS) receiver), altitude sensors (for example, an air pressure sensor from which altitude may be derived), and/or orientation sensors (for example, magnetometers).

The I/O components 850 may include communication components 864, implementing a wide variety of technologies operable to couple the machine 800 to network(s) 870 and/or device(s) 880 via respective communicative couplings 872 and 882. The communication components 864 may include one or more network interface components or other suitable devices to interface with the network(s) 870. The communication components 864 may include, for example, components adapted to provide wired communication, wireless communication, cellular communication, Near Field Communication (NFC), Bluetooth communication, Wi-Fi, and/or communication via other modalities. The device(s) 880 may include other machines or various peripheral devices (for example, coupled via USB).

In some examples, the communication components 864 may detect identifiers or include components adapted to detect identifiers. For example, the communication components 864 may include Radio Frequency Identification (RFID) tag readers, NFC detectors, optical sensors (for example, one- or multi-dimensional bar codes, or other optical codes), and/or acoustic detectors (for example, microphones to identify tagged audio signals). In some examples, location information may be determined based on information from the communication components 864, such as, but not limited to, geo-location via Internet Protocol (IP) address, location via Wi-Fi, cellular, NFC, Bluetooth, or other wireless station identification and/or signal triangulation.

In the preceding detailed description, numerous specific details are set forth by way of examples in order to provide a thorough understanding of the relevant teachings. However, it should be apparent that the present teachings may be practiced without such details. In other instances, well known methods, procedures, components, and/or circuitry have been described at a relatively high-level, without detail, in order to avoid unnecessarily obscuring aspects of the present teachings.

While various embodiments have been described, the description is intended to be exemplary, rather than limiting, and it is understood that many more embodiments and implementations are possible that are within the scope of the embodiments. Although many possible combinations of features are shown in the accompanying figures and discussed in this detailed description, many other combinations of the disclosed features are possible. Any feature of any embodiment may be used in combination with or substituted for any other feature or element in any other embodiment unless specifically restricted. Therefore, it will be understood that any of the features shown and/or discussed in the present disclosure may be implemented together in any suitable combination. Accordingly, the embodiments are not to be restricted except in light of the attached claims and their equivalents. Also, various modifications and changes may be made within the scope of the attached claims.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

The scope of protection is limited solely by the claims that now follow. That scope is intended and should be interpreted to be as broad as is consistent with the ordinary meaning of the language that is used in the claims when interpreted in light of this specification and the prosecution history that follows and to encompass all structural and functional equivalents.

Except as stated immediately above, nothing that has been stated or illustrated is intended or should be interpreted to cause a dedication of any component, step, feature, object, benefit, advantage, or equivalent to the public, regardless of whether it is or is not recited in the claims.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a" or "an" does not, without further constraints, preclude the existence of additional identical elements in the process, method, article, or apparatus that comprises the element. Furthermore, subsequent limitations referring back to "said element" or "the element" performing certain functions signifies that "said element" or "the element" alone or in combination with additional identical elements in the process, method, article, or apparatus are capable of performing all of the recited functions.

In the foregoing Detailed Description, it can be seen that various features are grouped together in various examples for the purpose of streamlining the disclosure. This method of disclosure is not to be interpreted as reflecting an intention that the claims require more features than are expressly recited in each claim. Rather, as the following claims reflect, inventive subject matter lies in less than all features of a single disclosed example.

Alternatively or in addition to the other examples described herein, examples include any combination of the following clauses:

Clause A. A data processing system comprising: a processor; and a machine-readable medium storing executable instructions that, when executed, cause the processor alone or in combination with other processors to perform operations comprising: obtaining a first frame of video content comprising a plurality of frames over which a target object is to be tracked; obtaining a first point input denoting a point on the first frame of the video content representing a location of the target object on the first frame of the video content; obtaining a natural language description of the target object; encoding the first frame of the video content, the first point input, and the natural language description of the target object as fused encoding information using a single object tracking pipeline; and tracking the target object with the single object tracking pipeline using the fused encoding information.

Clause B. The data processing system of clause A, wherein encoding the first frame of the video content, the first point input, and the natural language description of the target object as the fused encoding information further comprises: analyzing the first point input using a click encoder configured to generate point embeddings by encoding the first point input using Gaussian Random Fourier features and a learnable embedding vector; and providing the point embeddings as an input to a unified fusion encoder of the single object tracking pipeline.

Clause C. The data processing system of clause B, wherein during a training phase of the single object tracking pipeline, the first point input comprises a center of a ground truth bounding box of the target object and a random jitter component.

Clause D. The data processing system of clause B or clause C, wherein during an evaluation phase of the single object tracking pipeline, the first point input comprises a user-specified point selected on a user interface of a tracking application.

Clause E. The data processing system of any preceding clause, wherein the machine-readable medium further includes instructions configured to cause the processor alone or in combination with other processors to perform operations of: obtaining a second frame of the video content; determining a second point input denoting a second point on the first frame of the video content based on a predicted bounding box of the target object in the first frame of the video content; encoding the second frame of video content, the second point input, and the natural language description of the target object to obtain second fused encoding information using the single object tracking pipeline; and tracking the target object using the second fused encoding information.

Clause F. The data processing system of any preceding clause, wherein encoding the first frame of the video content, the first point input, and the natural language description of the target object as the fused encoding information further comprises: tokenizing the natural language description using a tokenizer to obtain a list of tokens; adding a classification token to a beginning of the list of tokens and a separator token at an end of the list of tokens; encoding the list of tokens using a language model to obtain language embeddings representing the natural language description; and providing the language embeddings as an input to a unified fusion encoder of the single object tracking pipeline.

Clause G. The data processing system of any preceding clause, wherein encoding the first frame of the video content, the first point input, and the natural language description of the target object as the fused encoding information further comprises: analyzing the first frame of the video content using a Swin Transformer model to generate image embeddings; and providing the image embeddings as an input to a unified fusion encoder of the single object tracking pipeline.

Clause H. The data processing system of any preceding clause, wherein encoding the first frame of the video content, the first point input, and the natural language description of the target object as the fused encoding information further comprises: generating embeddings associated with the first frame of the video content, the first point input, and the natural language description; and providing the embeddings as an input to a unified fusion encoder trained to analyze the embeddings and generate features associated with the first frame of the video content, the first point input, and the natural language description.

Clause I. The data processing system of any preceding clause, wherein tracking the target object with the single object tracking pipeline further comprises: generating a click temporal cue for tracking the target object based on previous point inputs associated with the target object; and utilizing the click temporal cue to build a query for a unified fusion decoder to predict a bounding box for the target object associated with a current frame of the plurality of frames.

Clause J. The data processing system of any preceding clause, wherein tracking the target object with the single object tracking pipeline further comprises: generating a semantic temporal cue for tracking the target object based on previously predicted bounding boxes associated with the target object; and utilizing the semantic temporal cue to build a query for a unified fusion decoder to predict a bounding box for the target object associated with a current frame of the plurality of frames.

Clause K. The data processing system of any preceding clause, wherein tracking the target object with the single object tracking pipeline further comprises: analyzing the fused encoding information using a unified fusion decoder to predict a bounding box for the target object in the first frame of the video content.

Clause L. A method implemented in a data processing system for tracking objects in video content, the method comprising: obtaining a first frame of the video content comprising a plurality of frames over which a target object is to be tracked; obtaining a first point input denoting a point on the first frame of the video content representing a location of the target object on the first frame of the video content; obtaining a natural language description of the target object; encoding the first frame of the video content, the first point input, and the natural language description of the target object as fused encoding information using a single object tracking pipeline; and tracking the target object with the single object tracking pipeline using the fused encoding information.

Clause M. The method of clause L, wherein encoding the first frame of the video content, the first point input, and the natural language description of the target object as the fused encoding information further comprises: analyzing the first point input using a click encoder configured to generate point embeddings by encoding the first point input using Gaussian Random Fourier features and a learnable embedding vector; and providing the point embeddings as an input to a unified fusion encoder of the single object tracking pipeline.

Clause N. The method of clause L or clause M, wherein during a training phase of the single object tracking pipeline, the first point input comprises a center of a ground truth bounding box of the target object and a random jitter component.

Clause O. The method of any of clauses L to N, wherein during an evaluation phase of the single object tracking pipeline, the first point input comprises a user-specified point selected on a user interface of a tracking application.

Clause P. The method of any of clauses L to O, further comprising: obtaining a second frame of the video content; determining a second point input denoting a second point on the second frame of the video content based on a predicted bounding box of the target object in the first frame of the video content; encoding the second frame of the video content, the second point input, and the natural language description of the target object to obtain second fused encoding information using the single object tracking pipeline; and tracking the target object using the second fused encoding information.

Clause Q. A data processing system comprising: a processor; and a machine-readable medium storing executable instructions that, when executed, cause the processor alone or in combination with other processors to perform operations comprising: receiving, at a single object tracking pipeline, a request to track a target object from an object tracking application, the request including a first point input denoting a point on a first frame of video content representing a location of the target object on the first frame of the video content and a natural language description of the target object; encoding the first frame of the video content using an image encoder to obtain image embeddings; encoding the first point input using a click encoder to obtain click embeddings; encoding the natural language description of the target object using a language encoder to obtain language embeddings; providing the image embeddings, the language embeddings, and the click embeddings as an input to a unified fusion encoder to obtain fused encoding information; and providing the fused encoding information to a unified fusion decoder to obtain bounding box information for the target object, the bounding box information surrounding a predicted location of the target object within the first frame of the video content.

Clause R. The data processing system of clause Q, wherein encoding the first point input using a click encoder to obtain click embeddings further comprises: analyzing the first point input using a click encoder configured to generate the click embeddings by encoding the first point input using Gaussian Random Fourier features and a learnable embedding vector.

Clause S. The data processing system of clause Q or clause R, wherein during a training phase of the single object tracking pipeline, the first point input comprises a center of a ground truth bounding box of the target object and a random jitter component.

Clause T. The data processing system of any of clauses Q to S, wherein during an evaluation phase of the single object tracking pipeline, the first point input comprises a user-specified point selected on a user interface of a tracking application.

Claims

1. A data processing system (110, 800) comprising:

a processor (810); and
a machine-readable medium storing executable instructions that, when executed, cause the processor (810) alone or in combination with other processors to perform operations comprising:

obtaining a first frame (201) of video content comprising a plurality of frames over which a target object is to be tracked;
obtaining a first point input (202) denoting a point on the first frame (201) of the video content representing a location of the target object on the first frame (201) of the video content;
obtaining a natural language description (203) of the target object;
encoding the first frame (201) of the video content, the first point input (202), and the natural language description (203) of the target object as fused encoding information using a single object tracking pipeline (124); and
tracking the target object with the single object tracking pipeline (124) using the fused encoding information.

2. The data processing system (110, 800) of claim 1, wherein encoding the first frame (201) of the video content, the first point input (202), and the natural language description (203) of the target object as the fused encoding information further comprises:

analyzing the first point input (202) using a click encoder configured to generate point embeddings by encoding the first point input (202) using Gaussian Random Fourier features and a learnable embedding vector; and
providing the point embeddings as an input to a unified fusion encoder of the single object tracking pipeline (124).

3. The data processing system (110, 800) of claim 1 or claim 2, wherein during a training phase of the single object tracking pipeline (124), the first point input (202) comprises a center of a ground truth bounding box of the target object and a random jitter component.

4. The data processing system (110, 800) of any preceding claim, wherein during an evaluation phase of the single object tracking pipeline (124), the first point input (202) comprises a user-specified point selected on a user interface of a tracking application.

5. The data processing system (110, 800) of any preceding claim, wherein the machine-readable medium further includes instructions configured to cause the processor (810) alone or in combination with other processors to perform operations of:

obtaining a second frame of the video content;
determining a second point input denoting a second point on the first frame (201) of the video content based on a predicted bounding box of the target object in the first frame (201) of the video content;
encoding the second frame of video content, the second point input, and the natural language description (203) of the target object to obtain second fused encoding information using the single object tracking pipeline (124); and
tracking the target object using the second fused encoding information.

6. The data processing system (110, 800) of any preceding claim, wherein encoding the first frame (201) of the video content, the first point input (202), and the natural language description (203) of the target object as the fused encoding information further comprises:

tokenizing the natural language description (203) using a tokenizer to obtain a list of tokens;
adding a classification token to a beginning of the list of tokens and a separator token at an end of the list of tokens;
encoding the list of tokens using a language model to obtain language embeddings representing the natural language description (203); and
providing the language embeddings as an input to a unified fusion encoder of the single object tracking pipeline (124).

7. The data processing system (110, 800) of any preceding claim, wherein encoding the first frame (201) of the video content, the first point input (202), and the natural language description (203) of the target object as the fused encoding information further comprises:

analyzing the first frame (201) of the video content using a Swin Transformer model to generate image embeddings; and
providing the image embeddings as an input to a unified fusion encoder of the single object tracking pipeline (124).

8. The data processing system (110, 800) of any preceding claim, wherein encoding the first frame (201) of the video content, the first point input (202), and the natural language description (203) of the target object as the fused encoding information further comprises:

generating embeddings associated with the first frame (201) of the video content, the first point input (202), and the natural language description (203); and
providing the embeddings as an input to a unified fusion encoder trained to analyze the embeddings and generate features associated with the first frame (201) of the video content, the first point input (202), and the natural language description (203).

9. The data processing system (110, 800) of any preceding claim, wherein tracking the target object with the single object tracking pipeline (124) further comprises:

generating a click temporal cue for tracking the target object based on previous point inputs associated with the target object; and
utilizing the click temporal cue to build a query for a unified fusion decoder to predict a bounding box for the target object associated with a current frame of the plurality of frames.

10. The data processing system (110, 800) of any preceding claim, wherein tracking the target object with the single object tracking pipeline (124) further comprises:

generating a semantic temporal cue for tracking the target object based on previously predicted bounding boxes associated with the target object; and
utilizing the semantic temporal cue to build a query for a unified fusion decoder to predict a bounding box for the target object associated with a current frame of the plurality of frames.

11. The data processing system (110, 800) of any preceding claim, wherein tracking the target object with the single object tracking pipeline (124) further comprises:
analyzing the fused encoding information using a unified fusion decoder to predict a bounding box for the target object in the first frame (201) of the video content.

12. A method implemented in a data processing system (110, 800) for tracking objects in video content, the method comprising:

obtaining a first frame (201) of the video content comprising a plurality of frames over which a target object is to be tracked;
obtaining a first point input (202) denoting a point on the first frame (201) of the video content representing a location of the target object on the first frame (201) of the video content;
obtaining a natural language description (203) of the target object;
encoding the first frame (201) of the video content, the first point input (202), and the natural language description (203) of the target object as fused encoding information using a single object tracking pipeline (124); and
tracking the target object with the single object tracking pipeline (124) using the fused encoding information.

13. The method of claim 12, wherein encoding the first frame (201) of the video content, the first point input (202), and the natural language description (203) of the target object as the fused encoding information further comprises:

analyzing the first point input (202) using a click encoder configured to generate point embeddings by encoding the first point input (202) using Gaussian Random Fourier features and a learnable embedding vector; and
providing the point embeddings as an input to a unified fusion encoder of the single object tracking pipeline (124).

14. The method of claim 12 or claim 13, wherein during a training phase of the single object tracking pipeline (124), the first point input (202) comprises a center of a ground truth bounding box of the target object and a random jitter component.

**15.** A data processing system (110, 800) comprising:

a processor (810); and
a machine-readable medium storing executable instructions that, when executed, cause the processor (810) alone or in combination with other processors to perform operations comprising:

receiving, at a single object tracking pipeline (124), a request to track a target object from an object tracking application, the request including a first point input (202) denoting a point on a first frame (201) of video content representing a location of the target object on the first frame (201) of the video content and a natural language description (203) of the target object;
encoding the first frame (201) of the video content using an image encoder to obtain image embeddings;
encoding the first point input (202) using a click encoder to obtain click embeddings;
encoding the natural language description (203) of the target object using a language encoder to obtain language embeddings;
providing the image embeddings, the language embeddings, and the click embeddings as an input to a unified fusion encoder to obtain fused encoding information; and
providing the fused encoding information to a unified fusion decoder to obtain bounding box information for the target object, the bounding box information surrounding a predicted location of the target object within the first frame (201) of the video content.

FIG. 1

FIG. 2

**Object Tracking Application**

Click on the image below to identify
the object to be tracked.

310

Enter a description of the object to be tracked.

315

Submit

305

**FIG. 3A**

EP 4 657 374 A1

**Object Tracking Application**

Click on the image below to identify
the object to be tracked.

310

315

A white flatbed truck

305

( Clear Selection )  ( Submit )

**FIG. 3B**

FIG. 4

500

502

Obtain a first frame of video content comprising a plurality of frames over which a target object is to be tracked

504

Obtain a first point input denoting a point on the first frame of video content representing a location of the target object on the first frame of video content

506

Obtain a natural language description of the target object

508

Encode the first frame of video content, the first point input, and the natural language description of the target object as fused encoding information using a single object tracking pipeline

510

Track the target object with the single object tracking pipeline using the fused encoded information

**FIG. 5**

600

Receive, at a single object tracking pipeline, a request to track a target object from an object tracking application, the request including a first point input denoting a point on a first frame of video content representing a location of the target object on the first frame of the video content and a natural language description of the target object — 602

Encode the first frame of the video content using an image encoder to obtain image embeddings — 604

Encode the first point input using a click encoder to obtain click embeddings — 606

Encode the natural language description of the target object using a language encoder to obtain language embeddings — 608

Provide the image embeddings, the language embeddings, and the click embeddings as an input to a unified fusion encoder to obtain fused encoding information — 610

Provide the fused encoding information to a unified fusion decoder to obtain bounding box information for the target object, the bounding box information surrounding a predicted location of the target object within the first frame of the video content — 612

**FIG. 6**

**FIG. 7**

EP 4 657 374 A1

800

**PROCESSORS 810**

**PROCESSOR 812a**

INSTRUCTIONS 816

⋮

**PROCESSOR 812n**

INSTRUCTIONS 816

**MEMORY 830**

MAIN MEMORY 832

INSTRUCTIONS 816

STATIC MEMORY 834

INSTRUCTIONS 816

STORAGE UNIT 836

INSTRUCTIONS 816

BUS 802

**I/O COMPONENTS 850**

| USER OUTPUT 852 | USER INPUT 854 | BIOMETRIC 856 |
|---|---|---|
| VISUAL | ALPHANUMERIC | EXPRESSIONS |
| ACOUSTIC | POINTING | BIOSIGNALS |
| HAPTIC | TACTILE | IDENTIFICATION |
| | AUDIO | |

| MOTION 858 | ENVIRONMENTAL 860 | POSITION 862 |
|---|---|---|
| ACCELERATION | ILLUMINATION | LOCATION |
| ROTATION | ACOUSTIC | ORIENTATION |
| | TEMPERATURE | |

| COMMUNICATION 864 | | |
|---|---|---|
| WIRED | WIRELESS | CELLULAR |
| NEAR FIELD | BLUETOOTH | WI-FI |

872

882

NETWORK(S) 870

DEVICES 880

**FIG. 8**

Europäisches
Patentamt

European
Patent Office

Office européen
des brevets

# EUROPEAN SEARCH REPORT

**Application Number**

EP 25 17 8614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG GUANGTONG ET AL: "One-Stream Stepwise Decreasing for Vision-Language Tracking", IEEE TRANSACTIONS ON CIRCUITS AND SYSTEMS FOR VIDEO TECHNOLOGY, IEEE, USA, vol. 34, no. 10, 29 April 2024 (2024-04-29), pages 9053-9063, XP011986776, ISSN: 1051-8215, DOI: 10.1109/TCSVT.2024.3395352 [retrieved on 2024-04-30] * Fig. 3. * ----- | 1-15 | INV. G06T7/20 G06V10/764 G06V10/82 |
| A | YANG ZHENGYUAN ET AL: "Grounding-Tracking-Integration", IEEE TRANSACTIONS ON CIRCUITS AND SYSTEMS FOR VIDEO TECHNOLOGY, IEEE, USA, vol. 31, no. 9, 17 November 2020 (2020-11-17), pages 3433-3443, XP011876633, ISSN: 1051-8215, DOI: 10.1109/TCSVT.2020.3038720 [retrieved on 2021-09-01] * the whole document * ----- | 1-15 | |
| A | ZHOU LI ET AL: "Joint Visual Grounding and Tracking with Natural Language Specification", 2023 IEEE/CVF CONFERENCE ON COMPUTER VISION AND PATTERN RECOGNITION (CVPR), IEEE, 17 June 2023 (2023-06-17), pages 23151-23160, XP034401350, DOI: 10.1109/CVPR52729.2023.02217 [retrieved on 2023-08-22] * the whole document * ----- | 1-15 | TECHNICAL FIELDS SEARCHED (IPC)<br><br>G06T<br>G06V |
|  | -/-- | | |

The present search report has been drawn up for all claims

| Place of search | Date of completion of the search | Examiner |
|---|---|---|
| Munich | 16 October 2025 | Nicolau, Stephane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 17 8614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/177824 A1 (PRICE BRIAN [US] ET AL) 8 June 2023 (2023-06-08) | 15 | |
| A | * Fig. 2A, 2C and  58,78,155 * ----- | 1-14 | |
| A | Cheng Yangming ET AL:  "Segment and Track Anything", arXiv (Cornell University), 11 May 2023 (2023-05-11), XP093182583, DOI: 10.48550/arxiv.2305.06558 Retrieved from the Internet: URL:https://arxiv.org/pdf/2305.06558 * the whole document * ----- | 1-15 | |

TECHNICAL FIELDS
SEARCHED       (IPC)

The present search report has been drawn up for all claims

| Place of search | Date of completion of the search | Examiner |
|---|---|---|
| Munich | 16 October 2025 | Nicolau, Stephane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 8614

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2025

| Patent document cited in search report | Publication date | Patent family member(s) | Publication date |
|---|---|---|---|
| US 2023177824 A1 | 08-06-2023 | US 2019236394 A1 | 01-08-2019 |
| | | US 2023177824 A1 | 08-06-2023 |

EPO FORM P0459

For more details about this annex : see Official Journal of the European Patent Office, No. 12/82